# EUROPÄISCHE PATENTSCHRIFT

(11) **EP 2 812 219 B1**
(45) Veröffentlichungstag und Bekanntmachung des Hinweises auf die Patenterteilung: **06.07.2016**
(21) Anmeldenummer: 13704757.7
(22) Anmeldetag: 06.02.2013
(51) Int. Cl.: B60T 17/16, F16D 65/28

(54) **KOMBINIERTER BETRIEBS- UND FESTSTELLBREMSZYLINDER MIT DURCH DEN BETRIEBSBREMSDRUCK GESTEUERTEM FESTSTELLBREMSKOLBEN**
COMBINED SERVICE BRAKE AND PARKING BRAKE CYLINDER WITH PARKING BRAKE PISTON CONTROLLED BY THE SERVICE BRAKE PRESSURE
CYLINDRE DE FREIN DE SERVICE ET DE FREIN DE STATIONNEMENT COMBINÉ COMPRENANT UN PISTON DE FREIN DE STATIONNEMENT COMMANDÉ PAR LA PRESSION DU FREIN DE SERVICE

(30) Priorität: 10.02.2012 DE 102012002638
(43) Veröffentlichungstag der Anmeldung: 17.12.2014
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(86) Internationale Anmeldenummer: PCT/EP2013/052355
(87) Internationale Veröffentlichungsnummer: WO 2013/117605

(56) Entgegenhaltungen:
- DE-A1- 2 254 089
- DE-T2-602004 002 543
- US-A1- 2005 150 730

## Beschreibung

### Stand der Technik

Die Erfindung geht aus von einem kombinierten Betriebs- und Feststellbremszylinder für ein Fahrzeug, beinhaltend einen in einem Betriebsbremszylinder angeordneten und von einem abhängig von der Betätigung eines Betriebsbremsbetätigungsorgans gebildeten Betriebsbremsdruck gesteuerten Betriebsbremskolben, welcher einen Bremsmechanismus betätigt sowie einen Feststellbremszylinder mit einer druckbeaufschlagbaren oder druckentlastbaren Steuerkammer, um einen mittels einer Verriegelungseinrichtung verriegelbaren Feststellbremskolben zu steuern, wobei auf ein Feststellbremssignal hin der Feststellbremskolben durch die Verriegelungseinrichtung in einer Stellung verriegelbar ist, in welcher er den im Rahmen einer Betriebsbremsung in Zuspannstellung gebrachten Betriebsbremskolben in Zuspannstellung hält, gemäß dem Oberbegriff von Anspruch 1.

Eine gattungsgemäßer kombinierter Betriebsbrems- und Feststellbremszylinder ist beispielsweise aus der DE 60 2004 002 543 T2 bekannt. Dort wird eine Luftkammer des Betriebsbremszylinders mittels einer pneumatischen Leitung von einer von einem Betriebsbremsbetätigungsorgan betätigen Ventileinrichtung mit Betriebsbremsdruck versorgt. Weiterhin wird ein Luftzylinder, welcher den Feststellbremszylinder bildet, über eine pneumatische Leitung mit einem pneumatischen Steuerdruck versorgt, welcher abhängig von der Betätigung eines Feststellbremsbetätigungsorgans von einem Vorratsbehälter für die Feststellbremse abgeleitet ist.

Der vorliegenden Erfindung liegt demgegenüber die Aufgabe zugrunde, einen kombinierten Betriebsbrems- und Feststellbremszylinder der eingangs erwähnten Art derart weiter zu entwickeln, dass er beim Einsatz in einer druckmittelbetäigten Bremsanlage kostengünstiger verbaut werden kann.

Diese Aufgabe wird erfindungsgemäß durch die Merkmale von Anspruch 1 gelöst.

### Offenbarung der Erfindung

Die Erfindung sieht vor, dass sowohl die Verriegelungseinrichtung als auch der Feststellbremskolben vom Betriebsbremsdruck druckmittelgesteuert sind. Genauer sind die die Verriegelungseinrichtung als auch der Feststellbremskolben ausschließlich vom Betriebsbremsdruck druckmittelgesteuert.

Dies hat den Vorteil, dass wie beim eingangs genannten Stand der Technik keine eigene Druckmittelleitung mehr notwendig ist, durch welche die Verriegelungseinrichtung bzw. der Feststellbremskolben gesteuert wird. Vielmehr kann diese Steuerung nun durch eine einzige Druckmittelleitung erfolgen, welche zugleich zur Versorgung des Betriebsbremszylinders mit Betriebsbremsdruck dient. Da Druckmittelleitungen je nach Lage des kombiniertem Betriebs- und Feststellbremszylinders individuell gebogen und montiert werden müssen, bringt der Verzicht auf eine Druckmittelleitung je kombiniertem Betriebs- und Feststellbremszylinder beim Einbau eines solchen Bremszylinders eine erhebliche Ersparnis an Montage und Herstellkosten mit sich.

Die Erfindung ist für jegliche druckmittelgesteuerte kombinierte Betriebs- und Feststellbremszylinder anwendbar, insbesondere für pneumatisch oder hydraulisch gesteuerte.

Wenn im Folgenden von einem "Betriebsbremskolben" die Rede ist, so kann damit sowohl ein starrer Kolben als auch eine mit einem starren Membranteller zusammen wirkende Membran gemeint sein.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist an oder in dem kombinierten Betriebs- und Feststellbremszylinder unmittelbar eine Ventileinrichtung angeordnet, welche den Feststellbremskolben und die Verriegelungseinrichtung mittels des Betriebsbremsdrucks druckmittelsteuert. Die Druckmittelverbindungen zwischen der Ventileinrichtung und dem kombinierten Betriebs- und Feststellbremszylinder können dann sehr kurz ausfallen bzw. vollständig entfallen, wenn etwa eine direkte Druckmittelverbindung zwischen der Ventileinrichtung und der Betriebsbremskammer des Betriebsbremszylinders vorgesehen wird. Hierzu kann die Ventileinrichtung beispielsweise direkt an den kombinierten Betriebs- und Feststellbremszylinder angeflanscht sein und die Anschlüsse der Ventileinrichtung münden direkt in die Betriebsbremskammer.

Die Ventileinrichtung ist insbesondere ausgebildet, um die Steuerkammer des Feststellbremszylinders mit Betriebsbremsdruck zu beaufschlagen, um ihn in eine den Betriebsbremskolben in Bremszuspannstellung drängende oder haltende Position zu bringen, oder um die Steuerkammer vom Betriebsbremsdruck zu entlasten.

Gemäß einer Ausführungsform steht die Ventileinrichtung mit einer den Betriebsbremskolben steuernden Betriebsbremskammer in Verbindung, um die Steuerkammer des Feststellbremszylinders mit Betriebsbremsdruck zu beaufschlagen oder um diese Steuerkammer vom Betriebsbremsdruck zu entlasten. In diesem Fall erfolgt die Druckentlastung der Steuerkammer des Feststellbremszylinders über die Betriebsbremskammer, welche über das Betriebsbremsbetätigungsorgan, beispielsweise ein Betriebsbremsventil, druckentlastet wird. Dann muss an der Ventileinrichtung keine eigene Druckmittelsenke z.B. in Form einer Entlüftung vorgesehen werden, was auch einen Schalldämpfer erspart.

Alternativ kann vorgesehen sein, dass die Ventileinrichtung mit einer den Betriebsbremskolben steuernden Betriebsbremskammer in Verbindung steht, um die Steuerkammer des Feststellbremszylinders mit Betriebsbremsdruck zu beaufschlagen und eine Druckmittelsenke aufweist, um die Steuerkammer des Feststellbremszylinders vom Betriebsbremsdruck zu entlasten. In diesem Fall weist daher die Ventileinrichtung eine eigene Druckmittelsenke, beispielsweise in Form einer Entlüftung auf.

Besonders bevorzugt umfasst die Ventileinrichtung ein 3/2-Wege-Magnetventil, welches gemäß einer ersten Schaltstellung die Steuerkammer des Feststellbremszylinders über ein in Druckbeaufschlagungsrichtung der Steuerkammer öffnendes Rückschlagventil mit der Betriebsbremskammer des Betriebsbremszylinders verbindet und welches gemäß einer zweiten Schaltstellung die Steuerkammer des Feststellbremszylinders über ein in Druckentlastungsrichtung der Steuerkammer öffnendes Rückschlagventil mit der Betriebsbremskammer des Betriebsbremszylinders oder mit der Entlüftung verbindet.

Besonders bevorzugt weist die Verriegelungseinrichtung wenigstens ein durch den in der Steuerkammer des Feststellbremszylinders anstehenden Druck steuerbares Betätigungselement auf, welches einerseits wenigstens ein durch Federmittel außer Eingriff mit einem zylinderfesten Bauteil vorgespanntes und am Feststellbremskolben geführtes Verriegelungselement in Eingriff mit dem zylinderfesten Bauteil und andererseits den Feststellbremskolben in Zuspannrichtung betätigt. Mit anderen Worten hat dieses durch den Betriebsbremsdruck in der Steuerkammer des Feststellbremszylinders betätigte Betätigungselement eine vorteilhafte Doppelfunktion, indem es einerseits den Feststellbremskolben in Zuspannstellung bringt bzw. hält und andererseits auch die Verriegelungseinrichtung betätigt.

Gemäß einer besonders bevorzugten Realisierung dieser Doppelfunktion betätigt das Betätigungselement das Verriegelungselement und den Feststellbremskolben mittels einer Keilübersetzung, wobei eine axiale Betätigung des Betätigungselements infolge einer Betriebsbremsdruckeinsteuerung in die Steuerkammer des Feststellbremszylinders den Feststellbremskolben axial in Zuspannrichtung und das Verriegelungselements radial in Eingriff mit einem zylinderfesten Bauteil drängt.

Das zylinderfeste Bauteil wird beispielsweise durch eine im Feststellbremszylinder angeordnete Hohlstange gebildet, an deren radial äußerer Umfangsfläche eine Eingriffsfläche für das wenigstens eine Verriegelungselement ausgebildet ist.

Gemäß einer Weiterbildung sind mehrere die Hohlstange kreisringartig umschließende und gegeneinander federbelastete Verriegelungselemente derart vorgesehen, dass die Verriegelungselemente nach radial außen, in eine von der Eingriffsfläche entfernte Lage gedrängt sind.

Die Keilübersetzung kann einen ersten keilförmigen Querschnitt mit dem wenigstens einen Verriegelungselement aufweisen, welcher gegenüber einem weiteren keilförmigen Querschnitt der Keilübersetzung derart federbelastet ist, dass der eine keilförmige Querschnitt von dem weiteren keilförmigen Querschnitt Axialrichtung gesehen weg gedrängt ist.

Bevorzugt ist das Betätigungselement als ein in Axialrichtung auf den einen keilförmigen Querschnitt Druck ausübender Ring ausgebildet.

Der Feststellbremskolben ist beispielsweise gegen den in der Steuerkammer des Feststellbremszylinders herrschenden Druck in Bremslöserichtung federbelastet und als ein am radial äußeren Umfang der Hohlstange axial geführter Hohlkolben ausgebildet, mit einem offenen Ende, an welchem die Keilübersetzung sowie das Betätigungselement aufgenommen sind sowie mit einem als Boden ausgebildeten anderen Ende, und dass in der Wandung des Feststellbremskolbens wenigstens ein Verbindungskanal ausgebildet ist, um in Bremszuspannstellung das Innere des Feststellbremskolbens mit der Betriebsbremskammer zu verbinden, wobei Stellungen des Feststellbremskolbens existieren, in welchen sein Boden den Betriebsbremskolben kontaktiert oder in welchen sein Boden durch den in der Betriebsbremskammer herrschenden Druck von seinem Inneren her oder von der Betriebsbremskammer her belastet ist.

Die Steuerkammer kann dann als Ringkammer zwischen dem Betätigungselement und einem Ende des Feststellbremszylinders ausgebildet sein.

Das wenigstens eine Verriegelungselement und das zylinderfeste Bauteil sind bevorzugt derart ausgebildet sind, dass ein Formschluss zwischen dem Verriegelungselement und dem zylinderfesten Bauteil durch eine Bewegung des Feststellbremskolbens in Bremslöserichtung herstellbar und durch eine Bewegung des Feststellbremskolbens in Bremszuspannrichtung lösbar ist. Der Formschluss wird dann durch die im Feststellbremsfall wirkenden Bremskräfte verstärkt. Zum Lösen der formschlüssigen Verbindung muss daher zunächst der Feststellbremskolben in Bremszuspannrichtung durch Anlegen des Betriebsbremsdrucks belastet werden. Dies ist ohne weiteres möglich, als die zum Feststellbremsen benötigte Feststellbremskraft nur ca. 30% der maximalen Betriebsbremskraft beträgt und der Feststellbremskolben bzw. der von ihm belastete Betriebsbremskolben ausgehend vom Feststellbremszustand noch weiter in Bremszuspannrichtung belastet werden kann.

Für den Fall, dass die Druckmittelversorgung ausfällt bzw. gestört ist, ist zum Notlösen der zugespannten Feststellbremse eine integrierte Notlöseeinrichtung vorgesehen, mit einer gegenüber einem Innengewinde der Hohlstange verschraubbaren Notlösespindel, wobei die Notlösespindel gegen den Boden des Feststellbremskolbens verschraubbar ist, um diesen ein Stück weit in Bremszuspannrichtung zu bewegen, um die Verriegelungseinrichtung zu entriegeln. Die Notlösespindel weist beispielsweise an ihrem vom Boden des Feststellbremskolbens weg weisenden Ende eine Ansatzfläche für ein manuell bedienbares Werkzeug auf, mit welchem dann die Notlösespindel verdreht werden kann. Nach Entriegelung der Verriegelungseinrichtung wird dann die Notlösespindel in einer Richtung verdreht, in welcher sich der in Bremslöserichtung federbelastete Feststellbremskolben bzw. der Betriebsbremskolben in Bremslöserichtung bewegt. Dieser Aufbau mit nur einer integrierten Notlösespindel ist äußerst einfach und kostengünstig.

Erfindungsgemäß beinhaltet daher eine druckmittelbetätigte Bremsanlage eines Fahrzeugs wenigstens einen vorangehend beschriebenen kombinierten Betriebs- und Feststellbremszylinder

Ein Verfahren zum Betreiben des kombinierter Betriebs- und Feststellbremszylinder beinhaltet dann folgende Schritte:
Zum Betriebsbremsen wird das Betriebsbremsbetätigungsorgan, beispielsweise ein Betriebsbremsventil in Bremszuspannstellung betätigt, um die Betriebsbremskammer des Betriebsbremszylinders mit Betriebsbremsdruck zu beaufschlagen. Weiterhin wird das 3/2-Wege-Magnetventil der Ventileinrichtung wird in seine zweite Schaltstellung geschaltet, in welcher zwar eine Strömung von der Steuerkammer des Feststellbremszylinders in die Betriebsbremskammer zwar theoretisch möglich ist, jedoch tatsächlich nicht stattfindet, weil die Steuerkammer druckentlastet ist.

Zum Zuspannen der Feststellbremse wird das 3/2-Wege-Magnetventil ausgehend von einer mit Betriebsbremsdruck beaufschlagten Betriebsbremskammer durch Betätigen des Feststellbremsbetätigungsorgans in seine erste Schaltstellung geschaltet. Die erste Schaltstellung des 3/2-Wege-Magnetventils ermöglicht, dass die Steuerkammer des Feststellbremszylinders mit dem in der Betriebsbremskammer herrschenden Betriebsbremsdruck beaufschlagt wird. Dann wirkt der Betriebsbremsdruck auf das Betätigungselement, welches wiederum die Keilübersetzung und damit den Feststellbremskolben in Bremszuspannrichtung belastet. Weiterhin wirkt der Betriebsbremsdruck, bedingt durch die in der Wandung des Feststellbremskolbens ausgebildeten Verbindungskanal auch am Boden des Feststellbremskolbens in Bremszuspannrichtung. Dies sorgt dafür, dass der Feststellbremskolben den Betriebsbremskolben in Bremszuspannrichtung belastet. Andererseits drängt das Betätigungselement über die Keilübersetzung das wenigstens eine Verriegelungselement in Eingriff mit der zylinderfesten Eingriffsfläche, jedoch ist dessen Federvorspannung noch zu groß, um einen Eingriff zuzulassen. Erst wenn das Betriebsbremsbetätigungsorgan in Bremslösestellung betätigt worden ist, entfällt der Betriebsbremsdruck am Boden des Feststellbremskolbens, so dass sich dieser bedingt durch die auf ihn wirkenden Bremskräfte ein kleines Stück weit in Bremslöserichtung bewegen kann, wodurch der Eingriff zwischen dem Verriegelungselement und der Eingriffsfläche stattfindet. Der Betriebsbremsdruck auf den Feststellbremskolben wird dann durch das weiterhin in der ersten Schaltstellung gehaltene 3/2-Wege-Magnetventil zunächst aufrecht erhalten. Jedoch wird dann das 3/2-Wege-Magnetventil durch Betätigen des Feststellbremsbetätigungsorgans in seine zweite Schaltstellung geschaltet, wodurch die Steuerkammer des Feststellbremskolbens über die Betriebsbremskammer druckentlastet wird. Dann ist der Feststellbremskolben druckfrei.

Folglich wird die zugespannte Feststellbremse bzw. die zugespannte Betriebsbremse dann lediglich durch die verriegelte Verriegelungseinrichtung in Bremszuspannstellung gehalten. Somit können Undichtigkeiten in den Druckleitungen bzw. im Bremszylinder nicht zu einem Nachlassen der Feststellbremskraft führen.

Zum Lösen der Feststellbremse wird zunächst das Betriebsbremsbetätigungsorgan in Bremszuspannstellung betätigt, um die Betriebsbremskammer mit Betriebsbremsdruck zu beaufschlagen sowie das 3/2-Wege-Magnetventil in seine erste Schaltstellung geschaltet. Die dadurch bedingte Belastung des Feststellbremskolbens in Bremszuspannrichtung bewirkt, dass sich die Verriegelungseinrichtung entriegelt. Wenn dann das Betriebsbremsbetätigungsorgan in Bremslösestellung betätigt und das 3/2-Wege-Magnetventil in seine zweite Schaltstellung geschaltet wird, so wird der in der Steuerkammer des Feststellbremszylinders, auf den Boden des Feststellbremskolbens sowie in der Betriebsbremskammer wirkende Betriebsbremsdruck abgebaut, so dass sich der federbelastete Feststellbremskolben in Bremslösestellung bewegen kann.

Zum Notlösen der zugespannten Feststellbremse wird die Notlösespindel gegen den Boden des Feststellbremskolbens verschraubt, um diesen ein Stück weit in Bremszuspannrichtung zu bewegen, um die Verriegelungseinrichtung zu entriegeln. Nach Entriegelung der Verriegelungseinrichtung wird dann der Feststellbremskolben durch seine Federbelastung in Bremslösestellung bewegt. Die Federbelastung des Verriegelungselements sorgt dann dafür, dass sich dieses in entriegelter Position hält.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine Querschnittsdarstellung eines kombinierten Betriebsbrems- und Feststellbremszylinders gemäß einer bevorzugten Ausführungsform der Erfindung in einer Ausgangsstellung;
- Fig.2: eine vergrößerte Querschnittsdarstellung einer Verriegelungseinrichtung des kombinierten Betriebsbrems- und Feststellbremszylinders von Fig.1;
- Fig.3: eine vergrößerte Vorderansicht der Verriegelungseinrichtung des kombinierten von Fig.2;
- Fig.4: eine Querschnittsdarstellung des kombinierten Betriebsbrems- und Feststellbremszylinders von Fig.1 in Betriebsbremsstellung;
- Fig.5: eine Querschnittsdarstellung des kombinierten Betriebsbrems- und Feststellbremszylinders von Fig.1 beim Einleiten der Feststellbremsstellung;
- Fig.6: eine Querschnittsdarstellung des kombinierten Betriebsbrems- und Feststellbremszylinders von Fig.1 beim Einleiten der Feststellbremsstellung;
- Fig.7: eine Querschnittsdarstellung des kombinierten Betriebsbrems- und Feststellbremszylinders von Fig.1 beim Einleiten der Feststellbremsstellung;
- Fig.8: eine Querschnittsdarstellung des kombinierten Betriebsbrems- und Feststellbremszylinders von Fig.1 in Feststellbremsstellung;
- Fig.9: eine Querschnittsdarstellung des kombinierten Betriebsbrems- und Feststellbremszylinders von Fig.1 beim Einleiten des Lösens der Feststellbremsstellung;
- Fig.10: eine Querschnittsdarstellung des kombinierten Betriebsbrems- und Feststellbremszylinders von Fig.1 beim Einleiten des Lösens der Feststellbremsstellung;
- Fig.11: eine Querschnittsdarstellung des kombinierten Betriebsbrems- und Feststellbremszylinders von Fig.1 beim Einleiten des Lösens der Feststellbremsstellung;
- Fig.12: eine Querschnittsdarstellung des kombinierten Betriebsbrems- und Feststellbremszylinders von Fig.1 beim Notlösen der Feststellbremse;
- Fig.13: eine Querschnittsdarstellung des kombinierten Betriebsbrems- und Feststellbremszylinders von Fig.1 beim Notlösen der Feststellbremse;
- Fig.14: eine Querschnittsdarstellung eines kombinierten Betriebsbrems- und Feststellbremszylinders gemäß einer weiteren Ausführungsform der Erfindung in einer Ausgangsstellung;
- Fig.15: eine Querschnittsdarstellung eines kombinierten Betriebsbrems- und Feststellbremszylinders gemäß einer weiteren Ausführungsform der Erfindung in einer Ausgangsstellung.

### Beschreibung der Ausführungsbeispiele

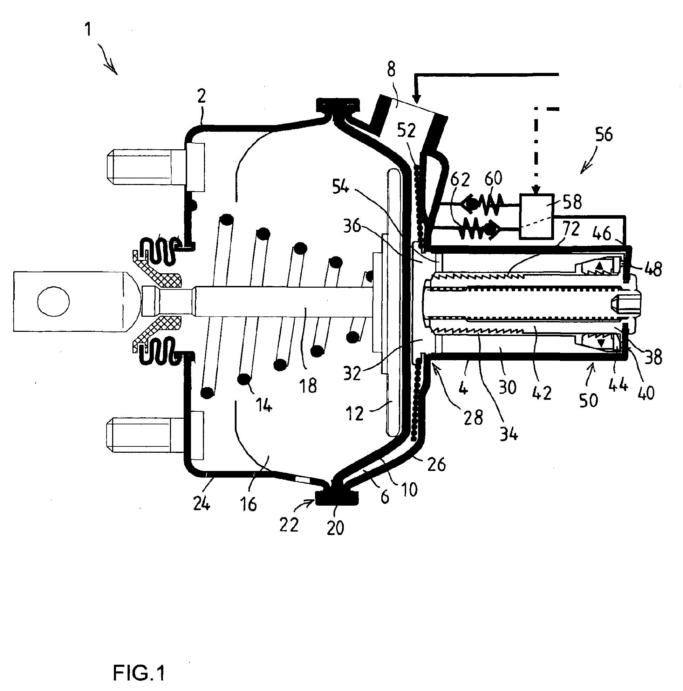

In Fig.1 ist ein kombinierter pneumatischer Betriebsbrems- und Feststellbremszylinder 1 einer pneumatischen oder elektro-pneumatischen Bremsanlage eines Fahrzeugs dargestellt. Der kombinierte Betriebsbrems- und Feststellbremszylinder 1 besteht aus einem Betriebsbremszylinder 2 und aus einem mit diesem baulich und funktionell verbundenen Feststellbremszylinder 4.

In eine Betriebsbremskammer 6 des Betriebsbremszylinders 2 mündet ein Einlass 8, über welchen zum Betätigen des Betriebsbremszylinders 2 Druckluft eingelassen und abgelassen wird. Dieser Einlass 8 ist über eine Druckleitung bevorzugt mit einem hier aus Maßstabsgründen nicht gezeigten Betriebsbremsbetätigungsorgan, beispielsweise mit einem Betriebsbremsventil verbunden, welches durch den Fahrer betätigt wird und abhängig von seiner Betätigung einen Betriebsbremsdruck in die Betriebsbremskammer 6 einsteuert.

Die Druckluft bzw. der Betriebsbremsdruck wirkt auf eine innerhalb des Betriebsbremszylinders 2 eingesetzte Membrane 10 ein, an deren entgegen gesetzter Seite ein Druckstück in Form eines steifen Membrantellers 12 vorgesehen ist. Genauer trennt die Membrane 10 die mit Druckmittel be- und entlastbare Betriebsbremskammer 6 des Betriebsbremszylinders 2 von einer eine am Membranteller 12 abgestützte Rückholfeder 14 aufnehmende Federkammer 16. Der Membranteller 12 ist mit einer Druckstange 18 verbunden, die mit einem hier nicht gezeigten Bremsbetätigungsmechanismus außerhalb des kombinierten Betriebsbrems- und Feststellbremszylinders 1 zusammenwirkt. Hierbei kann es sich beispielsweise um Betätigungselemente einer Scheibenbremse eines Kraftfahrzeugs handeln.

Der Betriebsbremszylinder 2 ist ein aktiver Bremszylinder, d.h. dass die Betriebsbremse durch Belüften der Betriebsbremskammer 6 zugespannt und durch Entlüften gelöst wird. Die sich einerseits am Membranteller 12 und andererseits am Boden des Betriebsbremszylinders 2 abstützende Rückholfeder 14 sorgt dafür, dass die Druckstange 18 bei entlüfteter Betriebsbremskammer 6 in die Lösestellung zurückgeholt wird.

Ein radial äußerer Befestigungsrand 20 der Membrane 10 weist einen keilförmigen, sich nach radial innen hin verjüngenden Querschnitt auf. Dieser radial äußere Befestigungsrand 20 der Membrane 10 mit dem keilförmigen, sich nach radial innen verjüngenden Querschnitt ist in eine komplementär geformte Aufnahme 22 mit keilförmigem, sich nach radial außen erweiternden Querschnitt zwischen zwei Gehäuseteile 24, 26 des Betriebsbremszylinders 2 geklemmt.

Auf der zur Membrane 10 weisenden Seite des Betriebsbremszylinders 2 ist der beispielsweise rohrförmige Feststellbremszylinder 4 an einer zentralen Öffnung 28 des Betriebsbremszylinders 2 befestigt. In dem Feststellbremszylinder 4 ist ein Feststellbremskolben 30 axial geführt, dessen zur Membrane 10 weisendes Ende 32 durch die zentrale Öffnung 28 des Betriebsbremszylinders 2 abgedichtet ragt. Der Feststellbremskolben 30 ist bevorzugt becherförmig ausgebildet, wobei das eine, durch die zentrale Öffnung des Betriebsbremszylinders ragende Ende 32 einen den Innenraum 34 des Feststellbremskolbens 30 verschließenden Boden 36 aufweist, während das andere Ende 38 des Feststellbremskolbens 30 offen ist, damit eine an dem vom Betriebsbremszylinder 2 weg weisenden Ende des Feststellbremszylinders 4 in einer zentralen Öffnung eines Deckels 40 des Feststellbremszylinders 4 gehaltene Hohlstange 42 in den Feststellbremszylinder 4 hineinragen kann.

Zwischen dem Deckel 40 am Ende des Feststellbremszylinders 4 und einem ringförmigen Betätigungselement 44 ist eine über einen Anschluss 46 druckbeaufschlagbare oder druckentlastbare Steuerkammer 48 ausgebildet. Die Steuerkammer 48 ist dann als Ringkammer zwischen dem Betätigungselement 44 und dem einem Ende des Feststellbremszylinders 4 ausgebildet sein. Das Betätigungselement 44 betätigt unter anderem eine mechanische Verriegelungseinrichtung 50 zur Verriegelung des Feststellbremskolbens 30 in der Bremszuspannstellung.

Der Feststellbremskolben 30 ist gegen den in der Steuerkammer 48 des Feststellbremszylinders 4 herrschenden Druck in Bremslöserichtung beispielsweise durch eine Hutfeder 52 federbelastet. In der Wandung des Feststellbremskolbens 30 sind im Bereich seines Bodens 36 mehrere beispielsweise radiale Verbindungskanäle 54 ausgebildet, um in Bremszuspannstellung den Innenraum 34 des Feststellbremskolbens 30 mit der Betriebsbremskammer 6 zu verbinden. Da der Boden 36 des Feststellbremskolbens 30 ebenfalls eine Wirkfläche für den Druck im Innenraum 34 darstellt, bildet dieser Innenraum 34 des Feststellbremskolbens 30 ebenfalls eine Steuerkammer aus. Insbesondere existieren Stellungen des Feststellbremskolbens 30, in welchen sein Boden 36 die Membrane 10 kontaktiert oder in welchen sein Boden 36 durch den in der Betriebsbremskammer 6 herrschenden Druck von seinem Innenraum 34 her und/oder von der Betriebsbremskammer 6 her belastet ist.

An dem kombinierten Betriebs- und Feststellbremszylinder1 ist unmittelbar eine Ventileinrichtung 56 angeordnet, welche den Feststellbremskolben 30 und die Verriegelungseinrichtung 50 mittels des in den Einlass 8 des Betriebsbremszylinders 2 eingesteuerten Betriebsbremsdrucks steuert. Da die Ventileinrichtung 56 beispielsweise direkt am kombinierten Betriebs- und Feststellbremszylinder 1 angeordnet bzw. dort angeflanscht ist, münden Anschlüsse der Ventileinrichtung 56 direkt in die Betriebsbremskammer 6 des Betriebsbremszylinders 2. Die Ventileinrichtung 56 ist ausgebildet, um die Steuerkammer 48 des Feststellbremszylinders 4 mit Betriebsbremsdruck zu beaufschlagen bzw. um die Steuerkammer 48 vom Betriebsbremsdruck zu entlasten. Hierzu steht die Ventileinrichtung 56 mit der Betriebsbremskammer 6 bevorzugt direkt in Verbindung. Die Druckbeaufschlagung bzw. die Druckentlastung der Steuerkammer 48 des Feststellbremszylinders 4 erfolgt bevorzugt über die Betriebsbremskammer 6.

Besonders bevorzugt umfasst die Ventileinrichtung 56 ein von einem hier nicht gezeigten elektronischen Steuergerät gesteuertes 3/2-Wege-Magnetventil 58, welches gemäß einer ersten, beispielsweise bestromten Schaltstellung die Steuerkammer 48 des Feststellbremszylinders 4 über ein in Druckbeaufschlagungsrichtung der Steuerkammer 48 öffnendes Rückschlagventil 60 mit der Betriebsbremskammer 6 des Betriebsbremszylinders 2 verbindet. In einer zweiten, beispielsweise unbestromten Schaltstellung wird die Steuerkammer 48 des Feststellbremszylinders 4 über ein in Druckentlastungsrichtung der Steuerkammer 48 öffnendes Rückschlagventil 62 mit der Betriebsbremskammer 6 des Betriebsbremszylinders 2 verbunden. Das elektronische Steuergerät ist beispielsweise ein separates oder in ein anderes Steuergerät integriertes Feststellbremssteuergerät und wird von einem Feststellbremsbetätigungsorgan, beispielsweise von einem Feststellbremshebel betätigt. Abhängig von der Stellung des Feststellbremsbetätigungsorgans erzeugt dann das Steuergerät Stellbefehle für das 3/2-Wege-Magnetventil.

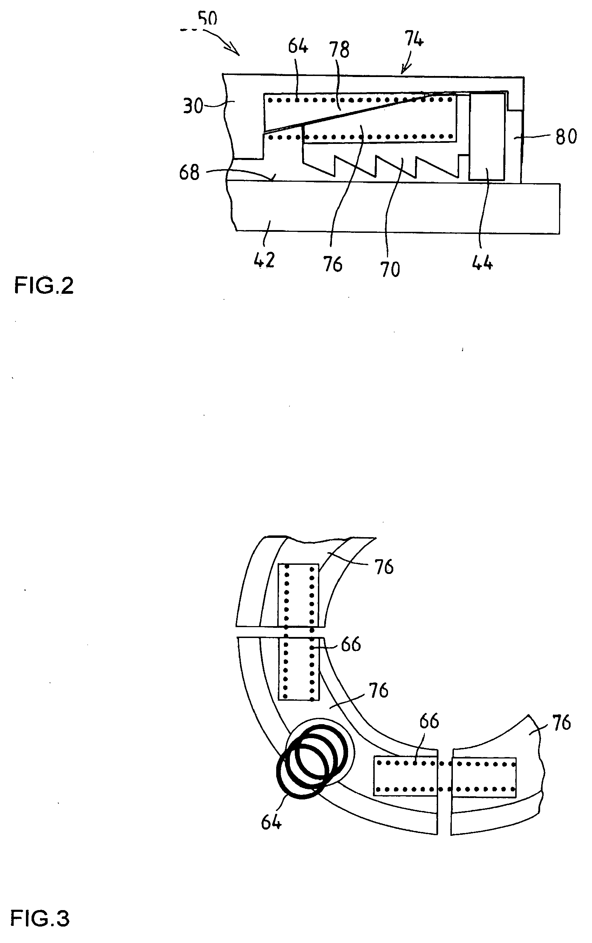

Wie bereits oben beschrieben, weist die Verriegelungseinrichtung 50 ein durch den in der Steuerkammer 48 des Feststellbremszylinders 4 anstehenden Druck steuerbares Betätigungselement 44 auf, welches mehrere durch Federmittel 64, 66 außer Eingriff mit einer radial äußeren Umfangsfläche 68 der Hohlstange 42 vorgespannte und am Feststellbremskolben 30 geführte Verriegelungselemente 70 in Eingriff mit der radial äußeren Umfangsfläche 68 der Hohlstange 42 betätigt. An der radial äußeren Umfangsfläche 68 der Hohlstange 42 ist eine Eingriffsfläche 72 für die Verriegelungselemente 70 ausgebildet. Andererseits betätigt Betätigungselement 44 den Feststellbremskolben 30 in Bremszuspannrichtung. Hierzu betätigt das Betätigungselement 44 die Verriegelungselemente 70 und den Feststellbremskolben 30 mittels einer Keilübersetzung 74, welche am besten anhand von Fig.2 und Fig.3 zu sehen ist.

Die Keilübersetzung 74 weist keilförmige Querschnitte 76 auf, an deren radial innerer Umfangsfläche die Verriegelungselemente 70 ausgebildet sind, wobei die keilförmigen Querschnitte 76 sich über den Umfang erstreckende Kreisbogenabschnitte bilden, welche die Hohlstange 42 kreisringartig umschließen und gegeneinander durch Federelemente 66 in Umfangsrichtung auf Umfangsabstand zueinander und insbesondere auf radialen Abstand zur Eingriffsfläche 72 an der radial äußeren Umfangsfläche 68 der Hohlstange 42 belastet sind.

Weiterhin sind die keilförmigen Querschnitte 76 gegenüber einem weiteren keilförmigen Querschnitt 78 der Keilübersetzung 74 durch weitere Federelemente 64 derart federbelastet, dass die einen keilförmigen Querschnitte 76 von dem weiteren keilförmigen Querschnitt 78 in Axialrichtung gesehen auf Abstand belastet sind. Der weitere keilförmige Querschnitt 78 wird bevorzugt durch eine umlaufende Keilfläche in einer radial inneren Ausnehmung 80 am Ende 38 des Feststellbremskolbens 30 gebildet, in welcher auch die einen keilförmigen Querschnitte 76 und das Betätigungselement aufgenommen sind. Bevorzugt ist das Betätigungselement 44 als ein in Axialrichtung auf die einen keilförmigen Querschnitte 76 Druck ausübender Ring ausgebildet. Somit können sich das Betätigungselement 44 sowie die einen keilförmigen Querschnitte 76 in der Ausnehmung 80 axial bewegen bzw. sind dort axial geführt.

Wie anhand von Fig.2 leicht vorstellbar ist, wird bei einer axialen Betätigung des Betätigungselements 44 infolge einer Betriebsbremsdruckeinsteuerung in die Steuerkammer 48 des Feststellbremszylinders 4 der Feststellbremskolben 30 axial in Bremszuspannrichtung und die einen keilförmigen Querschnitte 76 zusammen mit den Verriegelungselementen 70 radial in Eingriff mit der Eingriffsfläche 72 der Hohlstange 42 gedrängt.

Die Verriegelungselemente 70 sind beispielsweise klauenartig ausgebildet, zum formschlüssigen Eingriff in an der Eingriffsfläche 72 ausgebildete komplementäre Klauen, wobei die Klauen derart schräg ausrichtet sind, dass der Formschluss in Bremszuspannrichtung des Feststellbremskolbens gelöst und in Bremslöserichtung des Feststellbremskolbens hergestellt bzw. durch die im Feststellbremsfall wirkenden Bremskräfte verstärkt wird.

Für den Fall, dass die Druckmittelversorgung ausfällt bzw. gestört ist, ist zum Notlösen der zugespannten Feststellbremse eine integrierte Notlöseeinrichtung 82 vorgesehen, mit einer gegenüber einem Innengewinde der Hohlstange 42 verschraubbaren Notlösespindel 84. Die Notlösespindel 84 ist gegen den Boden 36 des Feststellbremskolbens 30 verschraubbar ist, um diesen ein Stück weit in Bremszuspannrichtung zu bewegen, damit die Verriegelungseinrichtung 56 entriegelt werden kann. Die Notlösespindel 84 weist an ihrem vom Boden 36 des Feststellbremskolbens 30 weg weisenden Ende eine Ansatzfläche 86 für ein manuell bedienbares Werkzeug auf, mit welchem dann die Notlösespindel 84 verdreht und damit gegenüber der Hohlstange 42 verschraubt werden kann.

Vor diesem Hintergrund ist die Funktionsweise des kombinierten Betriebs- und Feststellbremszylinders 1 dann wie folgt:
Ausgehend vom Ausgangszustand, in welchem das Betriebsbremsventil nicht betätigt und deshalb der Einlass 8 des Betriebsbremszylinders 2 druckentlastet und das 3/2-Wege-Magnetventil 58 unbestromt in seine zweite Schaltstellung geschaltet ist, soll eine Betriebsbremsung durchgeführt werden.

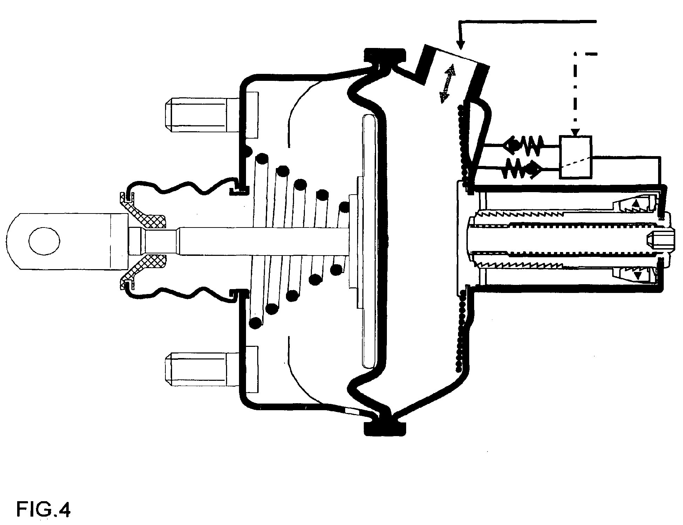

Zum Betriebsbremsen wird ein Fußpedal des Betriebsbremsventils in Bremszuspannstellung betätigt, um die Betriebsbremskammer 6 des Betriebsbremszylinders 2 mit Betriebsbremsdruck zu beaufschlagen. Diese Situation ist in Fig.4 gezeigt. Die Druckbeaufschlagung der Betriebsbremskammer 6 durch das Betriebsbremsventil bewirkt, dass die Membrane 10 zusammen mit dem Membranteller 12 und der Druckstange 18 in Fig.4 in Bremszuspannrichtung, also nach links gedrängt wird, um den Bremsmechanismus zu betätigen und die Bremse zuzuspannen. Das 3/2-Wege-Magnetventil 58 bleibt hierbei unbestromt in seiner zweiten Schaltstellung, weil das Feststellbremsbetätigungsorgan nicht betätigt wurde.

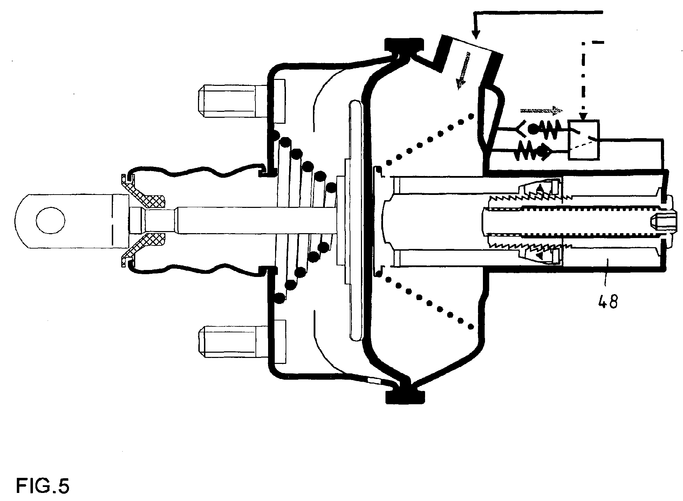

Zum Zuspannen der Feststellbremse wird das 3/2-Wege-Magnetventil 58 ausgehend von einer mit Betriebsbremsdruck beaufschlagten Betriebsbremskammer 6 durch Betätigen des Feststellbremsbetätigungsorgans vom Steuergerät bestromt und dadurch in seine erste Schaltstellung geschaltet, wie Fig.5 zeigt. Die erste Schaltstellung des 3/2-Wege-Magnetventils 58 ermöglicht, dass Druckluft unter dem in der Betriebsbremskammer 6 herrschenden Betriebsbremsdruck in die unter niedrigerem Druck stehende Steuerkammer 48 des Feststellbremszylinders 4 strömen kann, über das sich in Belüftungsrichtung öffnende Rückschlagventil 60 sowie das in die erste Schaltstellung geschaltete 3/2-Wege-Ventil 58.

Dann wirkt der Betriebsbremsdruck auf das Betätigungselement 44, welches wiederum die Keilübersetzung 74 und damit den Feststellbremskolben 30 in Bremszuspannrichtung belastet. Weiterhin wirkt der Betriebsbremsdruck, bedingt durch die in der Wandung des Feststellbremskolbens 30 ausgebildeten Verbindungskanäle 54 auch von dessen Innenraum 34 her auf den Boden 36 des Feststellbremskolbens 30 in Bremszuspannrichtung. Dies sorgt dafür, dass der Feststellbremskolben 30 in Fig.5 nach links ausfährt und die Membrane 10 kontaktierend in Bremszuspannrichtung belastet.

Andererseits drängt das Betätigungselement 44 über die Keilübersetzung 74 die Verriegelungselemente 70 nach radial innen, in Eingriff mit der zylinderfesten Eingriffsfläche 72 an der Hohlstange 42, jedoch ist die Federvorspannung der die Verriegelungselemente 70 auf Abstand haltenden Federn 64, 66 noch zu groß, um einen formschlüssigen Eingriff zuzulassen.

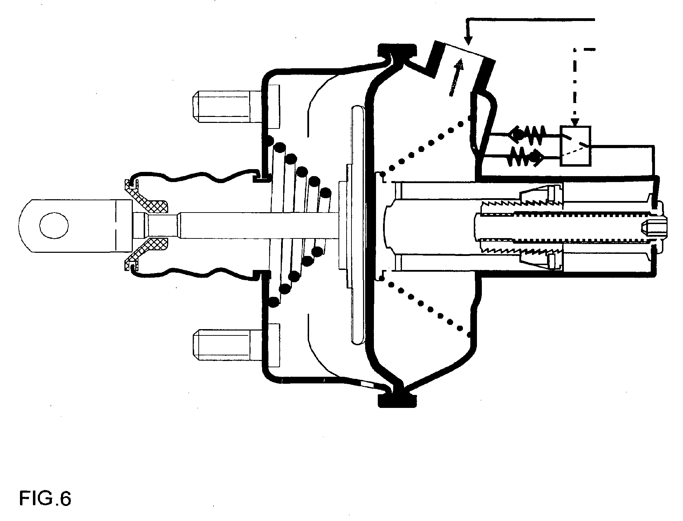

Erst wenn das Betriebsbremsbetätigungsorgan, d.h. das Fußpedal des Betriebsbremsventils in Bremslösestellung betätigt worden ist, entfällt der Betriebsbremsdruck am Boden 36 des Feststellbremskolbens 30, so dass sich dieser bedingt durch die auf ihn wirkenden Reaktionskräfte der zugespannten Bremse ein kleines Stück weit in Bremslöserichtung, also in Fig.6 nach rechts bewegen kann. Dann kann ein Eingriff zwischen den Verriegelungselementen 70 und der Eingriffsfläche stattfinden, welche den Formschluss in Bremslöserichtung herstellen. Der Betriebsbremsdruck in der Steuerkammer 48, welche auf den Feststellbremskolben dann immer noch wirkt, wird durch das weiterhin in der ersten Schaltstellung gehaltene 3/2-Wege-Magnetventil 58 zunächst noch aufrecht erhalten.

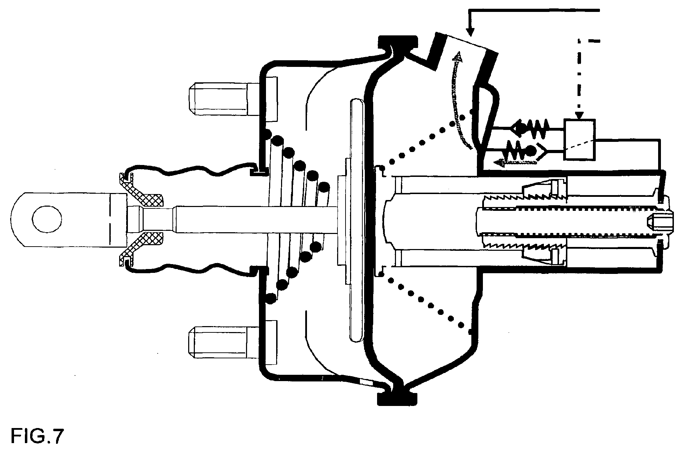

In einem weiteren Schritt wird dann das 3/2-Wege-Magnetventil 58 durch Betätigen des Feststellbremsbetätigungsorgans in seine zweite Schaltstellung geschaltet, wodurch die Steuerkammer 48 des Feststellbremszylinders 4 über die Betriebsbremskammer 6 druckentlastet wird. Wie Fig.7 zeigt, strömt die Druckluft dann über das sich in seiner zweiten Schaltstellung befindliche 3/2-Wege-Magnetventil 58 und über sich das in Druckentlastungsrichtung öffnende Rückschlagventil 62 in die Betriebsbremskammer 6 und von dort zur Entlüftung des Betriebsbremsventils. Dann ist der Feststellbremskolben 30 druckfrei geschaltet.

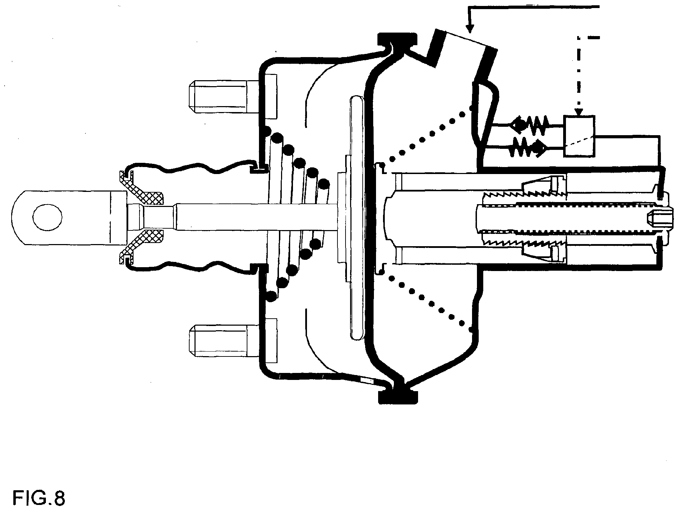

Folglich wird die zugespannte Feststellbremse bzw. die zugespannte Betriebsbremse dann ausschließlich durch die verriegelte Verriegelungseinrichtung 50 in Bremszuspannstellung gehalten. Dieser Zustand ist in Fig.8 gezeigt. Somit können Undichtigkeiten in den Druckleitungen bzw. in den Bremszylindern 2, 4 nicht zu einem Nachlassen der Feststellbremskraft führen.

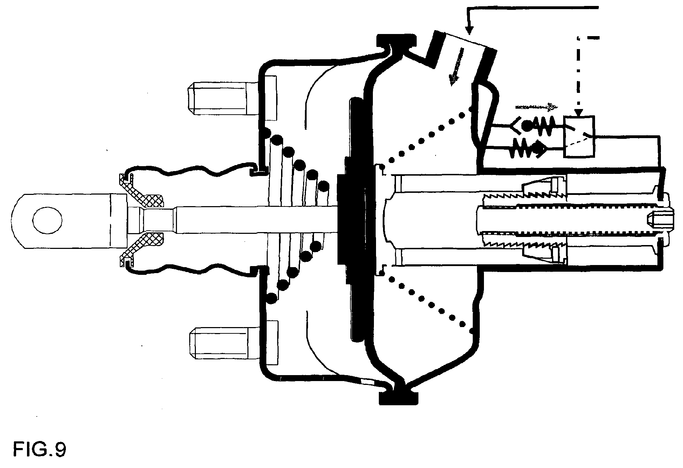

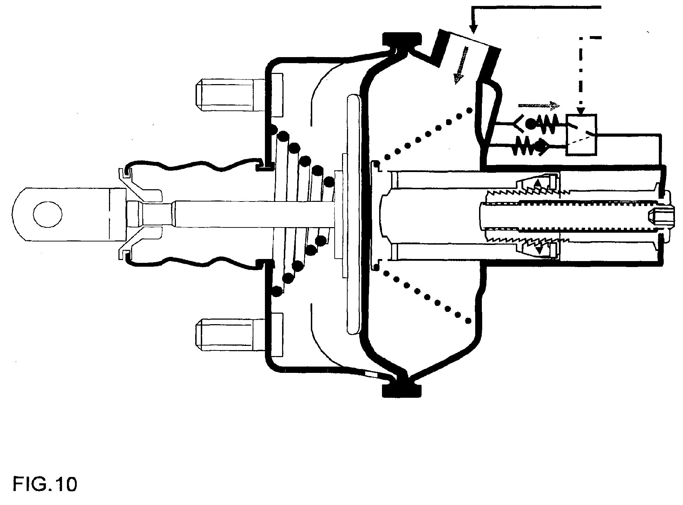

Zum Lösen der Feststellbremse wird zunächst das Betriebsbremsbetätigungsorgan in Bremszuspannstellung betätigt, um die Betriebsbremskammer 6 mit Betriebsbremsdruck zu beaufschlagen sowie das 3/2-Wege-Magnetventil 58 in seine erste Schaltstellung geschaltet. Dadurch kann wiederum Druckluft unter Betriebsbremsdruck in die Betriebsbremskammer 6 sowie über das sich in Belüftungsrichtung öffnende Rückschlagventil 60 und über das sich in seiner ersten Schaltstellung befindliche 3/2-Wege-Magnetventil 58 in die Steuerkammer 48 des Feststellbremszylinders 4 einströmen, wie in Fig.9 gezeigt ist. Weiterhin wird der Feststellkolben 30 auch an seinem Boden 36 durch den Betriebsbremsdruck in Bremszuspannrichtung belastet. Die Belastung des Feststellbremskolbens in Bremszuspannrichtung bewirkt, dass sich die Verriegelungseinrichtung 50 entriegelt, weil sich der Formschluss der schräg angeordneten Verriegelungselemente bzw. Klauen 70 mit der Eingriffsfläche 72 nur durch eine Bewegung der Verriegelungselemente 70 in Bremszuspannrichtung lösen kann. Diese Situation ist in Fig.10 gezeigt.

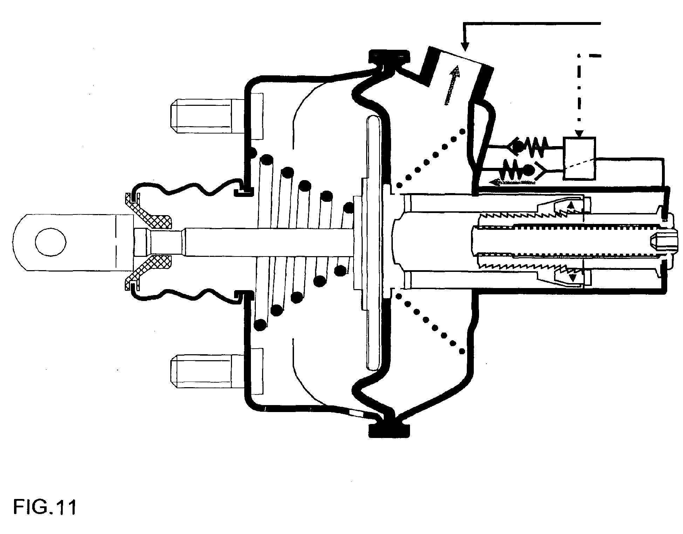

Wenn dann das Betriebsbremsbetätigungsorgan in Bremslösestellung betätigt und das 3/2-Wege-Magnetventil 58 durch eine entsprechende Betätigung des Feststellbremsbetätigungsorgans in seine zweite Schaltstellung geschaltet wird, so wird der in der Steuerkammer 48 des Feststellbremszylinders 4 auf den Feststellbremskolben 30 und auf den Boden 36 des Feststellbremskolbens 30 sowie in der Betriebsbremskammer 6 wirkende Betriebsbremsdruck abgebaut, so dass sich der durch die Hutfeder 52 belastete Feststellbremskolben 30 bei durch die Federkräfte der Federn 64, 66 entriegelt gehaltenen Verriegelungseinrichtung 50 in Bremslösestellung bewegen kann, wie Fig.11 zeigt.

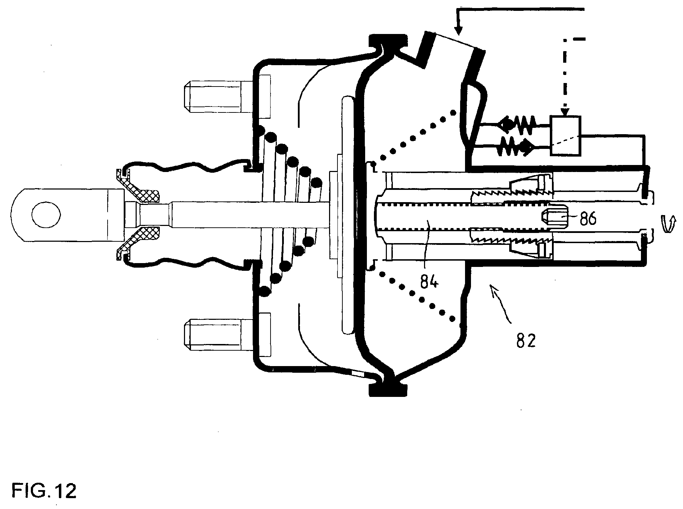

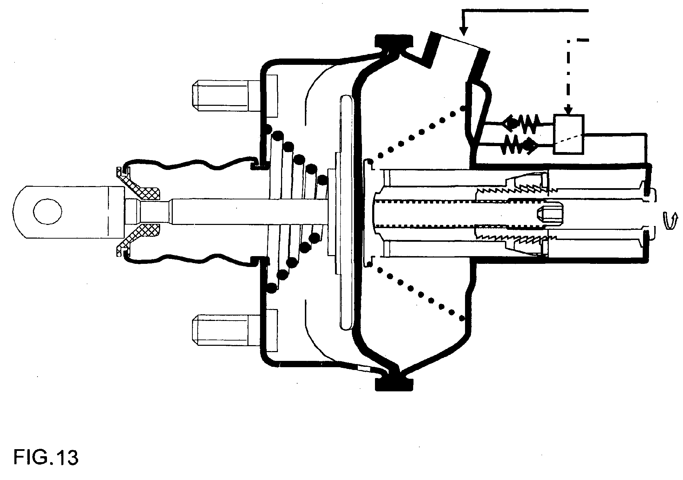

Wie Fig.12 zeigt, wird zum Notlösen der zugespannten Feststellbremse die Notlösespindel 84 mit Hilfe eines an der Ansatzfläche 86 angesetzten Werkzeugs gegen den Boden 36 des Feststellbremskolbens 30 verschraubt, um diesen ein Stück weit in Bremszuspannrichtung zu bewegen, damit die Verriegelungseinrichtung 50 entriegelt werden kann, wie in Fig. 13 veranschaulicht ist und bereits oben beschrieben wurde. Nach Entriegelung der Verriegelungseinrichtung 50 wird dann der Feststellbremskolben 30 durch die Belastung der Hutfeder 52 in Bremslösestellung bzw. in die Ausgangslage von Fig.1 bewegt. Die Belastung der Verriegelungselemente 70 durch die Federn 64, 66 sorgt dabei dafür, dass diese in entriegelter Position gehalten werden.

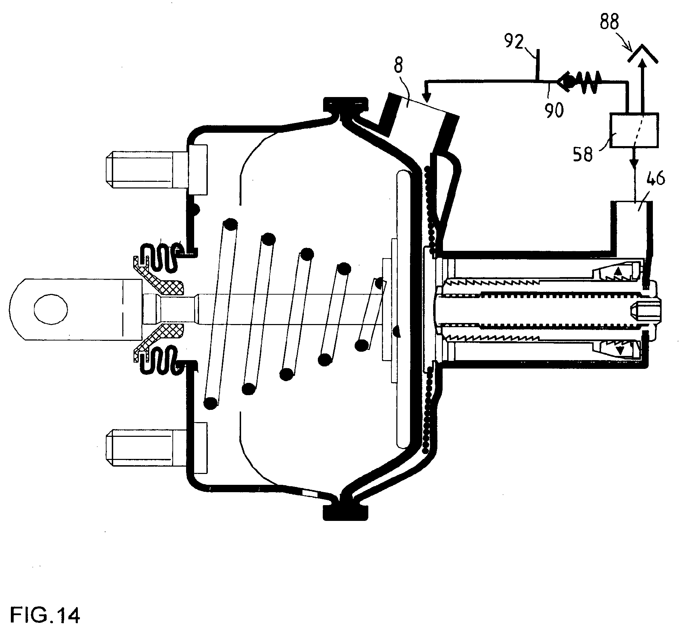

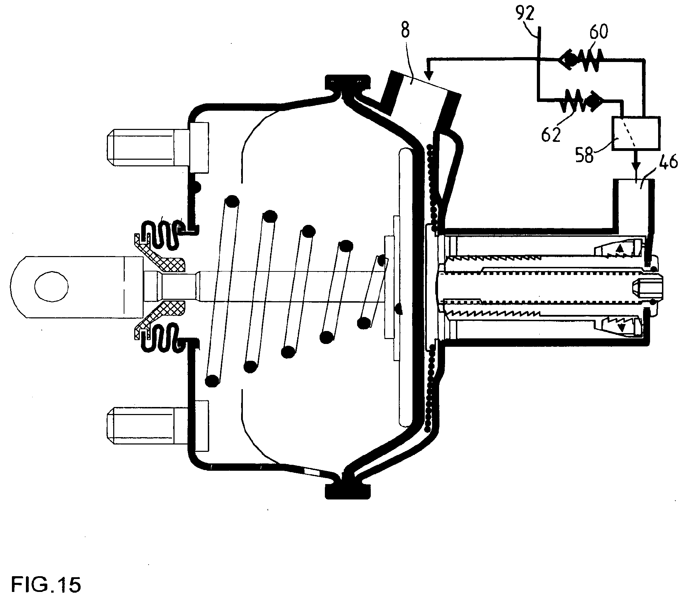

In Fig.14 und Fig.15 sind weitere Ausführungsformen des kombinierten Betriebsbrems- und Feststellbremskolbens 1 dargestellt, wobei identische bzw. gleich wirkende Bauteile und Bauelemente mit den gleichen Bezugszeichen wie im vorangehend beschriebenen Ausführungsbeispiel gekennzeichnet sind. Im Unterschied zu diesem führt bei dem Ausführungsbeispiel von Fig.14 von dem 3/2-Wege-Magnetventil 58 kein Entlüftungszweig in die Betriebsbremskammer 6. Vielmehr verfügt das 3/2-Wege-Magnetventil 58 über eine eigene Entlüftung 88, so dass die Druckentlastung des Feststellbremskolbens 30 nicht mehr über das Betriebsbremsventil sondern über diese Entlüftung 88 erfolgt. Auch die Druckbelastung des Feststellbremskolbens 30 erfolgt nicht über die Betriebsbremskammer 6 des Betriebsbremszylinders 2 sondern über einen Zweig 90 der Druckleitung 92, welche den Betriebsbremsdruck vom Betriebsbremsventil heranführt. In diesem Zweig 90 der Druckleitung 92 ist wiederum wie beim vorangehenden Ausführungsbeispiel ein in Belüftungsrichtung öffnendes Rückschlagventil 60 angeordnet.

Bei dem Ausführungsbeispiel von Fig.15 erfolgt die Entlüftung des Feststellbremszylinders 4 in die zum Betriebsbremsventil gezogene Druckleitung 92 über das 3/2-Wege-Magnetventil 58 sowie das Rückschlagventil 62. Ansonsten ist der Aufbau wie in Fig.14.

### Bezugszeichenliste

- 1: kombinierter Betriebs- und Feststellbremszylinder
- 2: Betriebsbremszylinder
- 4: Feststellbremszylinder
- 6: Betriebsbremskammer
- 8: Einlass
- 10: Membrane
- 12: Membranteller
- 14: Rückholfeder
- 16: Federkammer
- 18: Druckstange
- 20: Befestigungsrand
- 22: Aufnahme
- 24: Gehäuseteil
- 26: Gehäuseteil
- 28: Öffnung
- 30: Feststellbremskolben
- 32: Ende
- 34: Innenraum
- 36: Boden
- 38: Ende
- 40: Deckel
- 42: Hohlstange
- 44: Betätigungselement
- 46: Anschluss
- 48: Steuerkammer
- 50: Verriegelungseinrichtung
- 52: Hutfeder
- 54: Verbindungskanäle
- 56: Ventileinrichtung
- 58: 3/2-Wegemagnetventil
- 60: Rückschlagventil
- 62: Rückschlagventil
- 64: Federn
- 66: Federn
- 68: Umfangsfläche
- 70: Verriegelungselemente
- 72: Eingriffsfläche
- 74: Keilübersetzung
- 76: keilförmiger Querschnitt
- 78: keilförmiger Querschnitt
- 80: Ausnehmung
- 82: Notlöseeinrichtung
- 84: Notlösespindel
- 86: Ansatzfläche
- 88: Entlüftung
- 90: Zweig
- 92: Druckleitung

## Patentansprüche

1. Kombinierter Betriebs- und Feststellbremszylinder (1) für ein Fahrzeug, beinhaltend einen in einem Betriebsbremszylinder (2) angeordneten und von einem abhängig von der Betätigung eines Betriebsbremsbetätigungsorgans gebildeten Betriebsbremsdruck gesteuerten Betriebsbremskolben (10,12), welcher einen Bremsmechanismus betätigt sowie einen Feststellbremszylinder (4) mit einer druckbeaufschlagbaren oder druckentlastbaren Steuerkammer (48, 34), um einen mittels einer Verriegelungseinrichtung (50) verriegelbaren Feststellbremskolben (30) zu steuern, wobei auf ein Feststellbremssignal hin der Feststellbremskolben (30) durch die Verriegelungseinrichtung (50) in einer Stellung verriegelbar ist, in welcher er den im Rahmen einer Betriebsbremsung in Zuspannstellung gebrachten Betriebsbremskolben (10, 12) in Zuspannstellung hält, **dadurch gekennzeichnet, dass** sowohl die Verriegelungseinrichtung (50) als auch der Feststellbremskolben (30) vom Betriebsbremsdruck druckmittelgesteuert sind.

2. Kombinierter Betriebs- und Feststellbremszylinder nach Anspruch 1, **gekennzeichnet durch** eine an oder in ihm unmittelbar angeordnete Ventileinrichtung (56), welche den Feststellbremskolben (30) und die Verriegelungseinrichtung (50) mittels des Betriebsbremsdrucks druckmittelsteuert.

3. Kombinierter Betriebs- und Feststellbremszylinder nach Anspruch 2, **dadurch gekennzeichnet, dass** die Ventileinrichtung (56) wenigstens ein von einem elektronischen Steuergerät steuerbares Magnetventil (58) beinhaltet, wobei das Steuergerät abhängig von einer Betätigung eines Feststellbremsbetätigungsorgans elektrische Steuersignale für das wenigstens eine Magnetventil (58) aussteuert.

4. Kombinierter Betriebs- und Feststellbremszylinder nach einem der vorhergehenden Ansprüche 2 oder 3, **dadurch gekennzeichnet, dass** die Ventileinrichtung (56) ausgebildet ist, um die Steuerkammer (48) des Feststellbremszylinders (4) mit Betriebsbremsdruck zu beaufschlagen, um ihn in eine den Betriebsbremskolben (10, 12) in Bremszuspannstellung drängende oder haltende Position zu bringen, oder um die Steuerkammer (48) vom Betriebsbremsdruck zu entlasten.

5. Kombinierter Betriebs- und Feststellbremszylinder nach Anspruch 4, **dadurch gekennzeichnet, dass** die Ventileinrichtung (56) mit einer den Betriebsbremskolben (10, 12) steuernden Betriebsbremskammer (6) in Verbindung steht, um die Steuerkammer (48) des Feststellbremszylinders mit Betriebsbremsdruck zu beaufschlagen oder um diese Steuerkammer (48) vom Betriebsbremsdruck zu entlasten.

6. Kombinierter Betriebs- und Feststellbremszylinder nach Anspruch 4, **dadurch gekennzeichnet, dass** die Ventileinrichtung (56) mit einer den Betriebsbremskolben (10, 12) steuernden Betriebsbremskammer in Verbindung steht, um die Steuerkammer (48) des Feststellbremszylinders (4) mit Betriebsbremsdruck zu beaufschlagen und eine Druckmittelsenke (88) aufweist, um die Steuerkammer (48) des Feststellbremszylinders (4) vom Betriebsbremsdruck zu entlasten.

7. Kombinierter Betriebs- und Feststellbremszylinder nach Anspruch 5 oder 6, **dadurch gekennzeichnet, dass** die Ventileinrichtung (56) ein 3/2-Wege-Magnetventil (58) umfasst, welches gemäß einer ersten Schaltstellung die Steuerkammer (48) des Feststellbremszylinders (4) über ein in Druckbeaufschlagungsrichtung der Steuerkammer (48) öffnendes Rückschlagventil (60) mit der Betriebsbremskammer (6) des Betriebsbremszylinders (2) verbindet und welches gemäß einer zweiten Schaltstellung die Steuerkammer (48) des Feststellbremszylinders (4) über ein in Druckentlastungsrichtung der Steuerkammer (48) öffnendes Rückschlagventil (62) mit der Betriebsbremskammer (6) des Betriebsbremszylinders (2) oder mit der Entlüftung (88) verbindet.

8. Kombinierter Betriebs- und Feststellbremszylinder nach einem der vorhergehenden Ansprüche, **dadurch gekennzeichnet, dass** die Verriegelungseinrichtung (50) wenigstens ein durch den in der Steuerkammer (48) des Feststellbremszylinders (4) anstehenden Druck steuerbares Betätigungselement (44) aufweist, welches einerseits wenigstens ein durch Federmittel (64, 66) außer Eingriff mit einem zylinderfesten Bauteil (42) vorgespanntes und am Feststellbremskolben (30) geführtes Verriegelungselement (70) in Eingriff mit dem zylinderfesten Bauteil (42) und andererseits den Feststellbremskolben (30) in Zuspannrichtung betätigt.

9. Kombinierter Betriebs- und Feststellbremszylinder nach Anspruch 8, **dadurch gekennzeichnet, dass** das Betätigungselement (44) das Verriegelungselement (70) und den Feststellbremskolben (30) mittels einer Keilübersetzung (74) betätigt, wobei eine axiale Betätigung des Betätigungselements (44) infolge einer Betriebsbremsdruckeinsteuerung in die Steuerkammer (48) des Feststellbremszylinders (4) den Feststellbremskolben (30) axial in Zuspannrichtung und das Verriegelungselement (70) radial in Eingriff mit einem zylinderfesten Bauteil (42) drängt.

10. Kombinierter Betriebs- und Feststellbremszylinder nach Anspruch 8 oder 9, **dadurch gekennzeichnet, dass** das zylinderfeste Bauteil (42) durch eine im Feststellbremszylinder (4) angeordnete Hohlstange gebildet wird, an deren radial äußerer Umfangsfläche (68) eine Eingriffsfläche (72) für das wenigstens eine Verriegelungselement (70) ausgebildet ist.

11. Kombinierter Betriebs- und Feststellbremszylinder nach Anspruch 10, **dadurch gekennzeichnet, dass** mehrere die Hohlstange (42) kreisringartig umschließende und derart gegeneinander federbelastete Verriegelungselemente (70) vorgesehen sind, dass die Verriegelungselemente (70) nach radial außen, in eine von der Eingriffsfläche (72) entfernte Lage gedrängt sind.

12. Kombinierter Betriebs- und Feststellbremszylinder nach den Ansprüchen 9 und 11, **dadurch gekennzeichnet, dass** die Keilübersetzung (74) wenigstens einen keilförmigen Querschnitt (76) mit dem wenigstens einen Verriegelungselement (70) aufweist, welcher gegenüber einem weiteren keilförmigen Querschnitt (78) derart federbelastet ist, dass der eine keilförmige Querschnitt (76) von dem weiteren keilförmigen Querschnitt (78) in Axialrichtung gesehen weg gedrängt ist.

13. Kombinierter Betriebs- und Feststellbremszylinder nach Anspruch 12, **dadurch gekennzeichnet, dass** das Betätigungselement (44) als ein in Axialrichtung auf den einen keilförmigen Querschnitt (76) Druck ausübender Ring ausgebildet ist.

14. Kombinierter Betriebs- und Feststellbremszylinder nach Anspruch 13, **dadurch gekennzeichnet, dass** der Feststellbremskolben (30) gegen den in der Steuerkammer (48) des Feststellbremszylinders (4) herrschenden Druck federbelastet und als ein am radial äußeren Umfang der Hohlstange (42) axial geführter Hohlkolben ausgebildet ist, mit einem offenen Ende (38), an welchem die Keilübersetzung (74) sowie das Betätigungselement (44) aufgenommen sind, sowie mit einem als Boden (36) ausgebildeten anderen Ende (32), und dass in der Wandung des Feststellbremskolbens (30) wenigstens ein Verbindungskanal (54) ausgebildet ist, um in Bremszuspannstellung einen Innenraum (34) des Feststellbremskolbens (30) mit der Betriebsbremskammer (6) zu verbinden, wobei Stellungen des Feststellbremskolbens (30) existieren, in welchen sein Boden (36) den Betriebsbremskolben (10, 12) kontaktiert oder in welchen sein Boden (36) durch den in der Betriebsbremskammer (6) herrschenden Druck von seinem Innenraum (34) her oder von der Betriebsbremskammer (6) her belastet ist.

15. Kombinierter Betriebs- und Feststellbremszylinder nach Anspruch 14, **dadurch gekennzeichnet, dass** die Steuerkammer (48) als Ringkammer zwischen dem Betätigungselement (44) und einem Ende des Feststellbremszylinders (4) ausgebildet ist.

16. Kombinierter Betriebs- und Feststellbremszylinder nach einem der Ansprüche 8 bis 15, **dadurch gekennzeichnet, dass** das wenigstens eine Verriegelungselement (70) und das zylinderfeste Bauteil (42) derart ausgebildet sind, dass ein Formschluss zwischen dem Verriegelungselement (70) und dem zylinderfesten Bauteil (42) durch eine Bewegung des Feststellbremskolbens (30) in Bremslöserichtung herstellbar und durch eine Bewegung des Feststellbremskolbens (30) in Bremszuspannrichtung lösbar ist.

17. Kombinierter Betriebs- und Feststellbremszylinder nach einem der Ansprüche 10 bis 16, **dadurch gekennzeichnet, dass** sie eine gegenüber einem Innengewinde der Hohlstange (42) verschraubbare Notlösespindel (84) einer Notlöseeinrichtung (82) beinhaltet, wobei die Notlösespindel (84) gegen den Boden (36) des Feststellbremskolbens (30) verschraubbar ist, um diesen ein Stück weit in Bremszuspannrichtung zu bewegen, um die Verriegelungseinrichtung (50) zu entriegeln.

18. Druckmittelbetätigte Bremsanlage eines Fahrzeugs beinhaltend wenigstens einen kombinierten Betriebs- und Feststellbremszylinder (1) nach einem der vorhergehenden Ansprüche.

19. Verfahren zum Betreiben des kombinierter Betriebs- und Feststellbremszylinder nach den Ansprüchen 3, 7 und 17, **dadurch gekennzeichnet, dass**
a) zum Betriebsbremsen das Betriebsbremsbetätigungsorgan in Bremszuspannstellung betätigt wird, um die Betriebsbremskammer (6) mit Betriebsbremsdruck zu beaufschlagen und das 3/2-Wege-Magnetventil (58) in seine zweite Schaltstellung geschaltet wird,
b) zum Zuspannen einer Feststellbremse ausgehend von einer mit Betriebsbremsdruck beaufschlagten Betriebsbremskammer
b1) das 3/2-Wege-Magnetventil (58) durch Betätigen des Feststellbremsbetätigungsorgans in seine erste Schaltstellung geschaltet und das Betriebsbremsbetätigungsorgan in Bremslösestellung betätigt wird, und dann
b2) das das 3/2-Wege-Magnetventil (58) durch Betätigen des Feststellbremsbetätigungsorgans in seine zweite Schaltstellung geschaltet wird,
c) Zum Lösen der Feststellbremse zunächst das Betriebsbremsbetätigungsorgan in Bremszuspannstellung betätigt wird, um die Betriebsbremskammer (6) mit Betriebsbremsdruck zu beaufschlagen sowie das 3/2-Wege-Magnetventil (58) in seine erste Schaltstellung geschaltet und dass dann das Betriebsbremsbetätigungsorgan in Bremslösestellung betätigt und das 3/2-Wege-Magnetventil (58) in seine zweite Schaltstellung geschaltet wird,
d) zum Notlösen der zugespannten Feststellbremse die Notlösespindel (84) gegen den Boden (36) des Feststellbremskolbens (30) verschraubt wird, um diesen ein Stück weit in Bremszuspannrichtung zu bewegen, um die Verriegelungseinrichtung (50) zu entriegeln.

## Claims

1. Combined service brake and parking brake cylinder (1) for a vehicle, comprising a service brake piston (10, 12) arranged in a service brake cylinder (2) and controlled by a service brake pressure formed on the basis of the actuation of a service brake actuating member, said service brake piston actuating a braking mechanism, and a parking brake cylinder (4) with a control chamber (48, 34), which can be pressurized or relieved of pressure in order to control a parking brake piston (30) that can be locked by means of a locking device (50), wherein, in response to a parking brake signal, the parking brake piston (30) can be locked by the locking device (50) in a position in which it holds the service brake piston (10, 12), which has been brought into an application position as part of a service braking operation, in said application position, **characterized in that** both the locking device (50) and the parking brake piston (30) are subject to fluid-pressure control by the service brake pressure.

2. Combined service brake and parking brake cylinder according to Claim 1, **characterized by** a valve device (56), which is arranged directly on or in said cylinder and which exerts fluid-pressure control on the parking brake piston (30) and the locking device (50) by means of the service brake pressure.

3. Combined service brake and parking brake cylinder according to Claim 2, **characterized in that** the valve device (56) comprises at least one solenoid valve (58), which can be controlled by an electronic control unit, wherein the control unit outputs electric control signals for the at least one solenoid valve (58) on the basis of an actuation of a parking brake actuating member.

4. Combined service brake and parking brake cylinder according to either of Claims 2 and 3, **characterized in that** the valve device (56) is designed to supply the control chamber (48) of the parking brake cylinder (4) with service brake pressure in order to bring it into a position in which the service brake piston (10, 12) is pushed into or held in the brake application position or in order to relieve the control chamber (48) of the service brake pressure.

5. Combined service brake and parking brake cylinder according to Claim 4, **characterized in that** the valve device (56) is connected to a service brake chamber (6) controlling the service brake piston (10, 12) in order to supply the control chamber (48) of the parking brake cylinder with service brake pressure or in order to relieve this control chamber (48) of the service brake pressure.

6. Combined service brake and parking brake cylinder according to Claim 4, **characterized in that** the valve device (56) is connected to a service brake chamber controlling the service brake piston (10, 12) in order to supply the control chamber (48) of the parking brake cylinder (4) with service brake pressure, and has a pressure medium sink (88) in order to relieve the control chamber (48) of the parking brake cylinder (4) of the service brake pressure.

7. Combined service brake and parking brake cylinder according to Claim 5 or 6, **characterized in that** the valve device (56) comprises a 3/2-way solenoid valve (58) which, in a first position, connects the control chamber (48) of the parking brake cylinder (4) to the service brake chamber (6) of the service brake cylinder (2) via a check valve (60) that opens in the pressurization direction of the control chamber (48) and which, in a second position, connects the control chamber (48) of the parking brake cylinder (4) to the service brake chamber (6) of the service brake cylinder (2) or to the vent (88) via a check valve (62) that opens in the pressure relief direction of the control chamber (48).

8. Combined service brake and parking brake cylinder according to one of the preceding claims, **characterized in that** the locking device (50) has at least one actuating element (44) controllable by the pressure prevailing in the control chamber (48) of the parking brake cylinder (4), which element on the one hand actuates at least one locking element (70) guided on the parking brake piston (30) and preloaded by spring means (64, 66) out of engagement with a component (42) fixed to the cylinder into engagement with the component (42) fixed to the cylinder and, on the other hand, actuates the parking brake piston (30) in the application direction.

9. Combined service brake and parking brake cylinder according to Claim 8, **characterized in that** the actuating element (44) actuates the locking element (70) and the parking brake piston (30) by means of a wedge-type transmission device (74), wherein an axial actuation of the actuating element (44) owing to a service brake pressure input into the control chamber (48) of the parking brake cylinder (4) pushes the parking brake piston (30) axially in the application direction and the locking element (70) radially into engagement with a component (42) fixed to the cylinder.

10. Combined service brake and parking brake cylinder according to Claim 8 or 9, **characterized in that** the component (42) fixed to the cylinder is formed by a hollow rod, which is arranged in the parking brake cylinder (4) and on the radially outer circumferential surface (68) of which an engagement surface (72) for the at least one locking element (70) is formed.

11. Combined service brake and parking brake cylinder according to Claim 10, **characterized in that** a plurality of locking elements (70), which surround the hollow rod (42) in a ring pattern and are spring-loaded relative to one another in such a way that the locking elements (70) are pushed radially outward into a position remote from the engagement surface (72), is provided.

12. Combined service brake and parking brake cylinder according to Claims 9 and 11, **characterized in that** the wedge-type transmission device (74) has at least one wedge-shaped cross section (76) having the at least one locking element (70), which is spring-loaded relative to a further wedge-shaped cross section (78) in such a way that the first wedge-shaped cross section (76) is pushed away from the further wedge-shaped cross section (78), as seen in the axial direction.

13. Combined service brake and parking brake cylinder according to Claim 12, **characterized in that** the actuating element (44) is designed as a ring which exerts pressure on one wedge-shaped cross section (76) in an axial direction.

14. Combined service brake and parking brake cylinder according to Claim 13, **characterized in that** the parking brake piston (30) is spring-loaded against the pressure prevailing in the control chamber (48) of the parking brake cylinder (4) and is designed as a hollow piston which is guided axially on the radially outer circumference of the hollow rod (42), having an open end (38), on which the wedge-type transmission device (74) and the actuating element (44) are mounted, and having another end (32), which is designed as a base (36), and **in that** at least one connecting channel (54) is formed in the wall of the parking brake piston (30) in order to connect an interior (34) of the parking brake piston (30) to the service brake chamber (6) in the brake application position, wherein there are positions of the parking brake piston (30) in which the base (36) thereof makes contact with the service brake piston (10, 12) or in which the base (36) thereof is subjected to a load from the direction of its interior (34) or from the direction of the service brake chamber (6) by the pressure prevailing in the service brake chamber (6).

15. Combined service brake and parking brake cylinder according to Claim 14, **characterized in that** the control chamber (48) is designed as an annular chamber between the actuating element (44) and one end of the parking brake cylinder (4).

16. Combined service brake and parking brake cylinder according to one of Claims 8 to 15, **characterized in that** the at least one locking element (70) and the component (42) fixed to the cylinder are designed in such a way that a positive engagement can be established between the locking element (70) and the component (42) fixed to the cylinder by a movement of the parking brake piston (30) in the brake release direction, and can be released by a movement of the parking brake piston (30) in the brake application direction.

17. Combined service brake and parking brake cylinder according to one of Claims 10 to 16, **characterized in that** it comprises an emergency release spindle (84) of an emergency release device (82), which can be screwed relative to an internal thread of the hollow rod (42), wherein the emergency release spindle (84) can be screwed against the base (36) of the parking brake piston (30) in order to move it somewhat in the brake application direction in order to unlock the locking device (50).

18. Fluid-pressure actuated brake system of a vehicle comprising at least one combined service brake and parking brake cylinder (1) according to one of the preceding claims.

19. Method for operating the combined service brake and parking brake cylinder according to Claims 3, 7 and 17, **characterized in that**
a) for service braking, the service brake actuating member is actuated into the brake application position in order to supply the service brake chamber (6) with service brake pressure, and the 3/2-way solenoid valve (58) is switched to its second position,
b) to apply a parking brake, starting from a service brake chamber supplied with service brake pressure
b1) the 3/2-way solenoid valve (58) is switched to its first position by actuating the parking brake actuating member, and the service brake actuating member is actuated into the brake release position, and then
b2) the 3/2-way solenoid valve (58) is switched to its second position by actuating the parking brake actuating member,
c) to release the parking brake, the service brake actuating member is first of all actuated into the brake application position in order to supply the service brake chamber (6) with service brake pressure, and the 3/2-way solenoid valve (58) is switched to its first position, and that the service brake actuating member is then actuated into the brake release position, and the 3/2-way solenoid valve (58) is switched to its second position,
d) for emergency release of the applied parking brake, the emergency release spindle (84) is screwed against the base (36) of the parking brake piston (30) in order to move this somewhat in the brake application direction in order to unlock the locking device (50).

## Revendications

1. Cylindre de frein de service et de frein de stationnement combiné (1) pour un véhicule, comprenant un piston du frein de service (10, 12) disposé dans un cylindre de frein de service (2) et commandé par une pression de frein de service, qui est engendré en fonction de l'actionnement d'un organe de commande de frein de service, audit piston du frein de service commandant un mécanisme de freinage, et un cylindre de frein de stationnement (4) à une chambre de commande (48, 34), à laquelle on peut appliquer une pression ou dont la pression peut être détendue, pour la commande d'un piston du frein de stationnement (30) arrêtable moyennant un moyen de verrouillage (50), dans lequel, en réponse à un signal de freinage de stationnement, ledit piston du frein de stationnement (30) est arrêtable par ledit moyen de verrouillage (50) en une position, dans laquelle il maintient ledit piston du frein de service (10, 12), qui est porté en une position de serrage, en une position de serrage au cours d'un freinage de service, **caractérisé en ce que** ledit moyen de verrouillage (50) et aussi ledit piston du frein de stationnement (30) sont commandé à fluide par la pression de freinage de service.

2. Cylindre de frein de service et de frein de stationnement combiné selon la revendication 1, **caractérisé par** un moyen à vanne (56) disposé directement au cylindre ou dans son intérieur, qui commande par fluide ledit piston du frein de stationnement (30) et ledit moyen de verrouillage (50) moyennant la pression de freinage de service.

3. Cylindre de frein de service et de frein de stationnement combiné selon la revendication 2, **caractérisé en ce que** ledit moyen vanne (56) comprend au moins une vanne magnétique (58) commandable par un dispositif de commande électronique, dans lequel ledit dispositif de commande règle des signaux de commande électriques pour ladite au moins une vanne magnétique (58) en fonction de l'actionnement dudit organe de commande du frein de stationnement.

4. Cylindre de frein de service et de frein de stationnement combiné selon une quelconque des revendications précédentes 2 ou 3, **caractérisé en ce que** ledit moyen à vanne (56) est conçu pour l'application de la pression de freinage de service à ladite chambre de commande (48) dudit cylindre de frein de stationnement (4) afin de porter le dernier en une position de poussée ou de retenue ledit piston du frein de service (10, 12) en une position de serrage du frein ou afin de dépressuriser ladite chambre de commande (48) de la pression de freinage de service.

5. Cylindre de frein de service et de frein de stationnement combiné selon la revendication 4, **caractérisé en ce que** ledit moyen à vanne (56) se trouve en communication avec une chambre du frein de service (6), qui commande ledit piston du frein de service (10, 12), afin d'appliquer la pression de freinage de service à ladite chambre de commande (48) dudit cylindre de frein de stationnement ou afin de dépressuriser ladite chambre de commande (48) de la pression de freinage de service.

6. Cylindre de frein de service et de frein de stationnement combiné selon la revendication 4, **caractérisé en ce que** ledit moyen à vanne (56) se trouve en communication avec une chambre du frein de service (6), qui commande ledit piston du frein de service (10, 12), afin d'appliquer la pression de freinage de service à ladite chambre de commande (48) dudit cylindre de frein de stationnement (4), et présente un puits de fluide sous pression (88), afin de dépressuriser ladite chambre de commande (48) de la pression de freinage de service.

7. Cylindre de frein de service et de frein de stationnement combiné selon la revendication 5 ou 6, **caractérisé en ce que** ledit moyen à vanne (56) comprend une vanne magnétique à 3/2 voies (58), qui, en correspondance avec une première position de commande, relie ladite chambre de commande (48) dudit cylindre de frein de stationnement (4) via une vanne antiretour (60), qui s'ouvre en direction d'application de pression à ladite chambre de commande (48), à ladite chambre du frein de service (6) dudit cylindre de frein de service (2), et qui, en correspondance avec une deuxième position de commande, relie ladite chambre de commande dudit cylindre de frein de stationnement (4) via une vanne antiretour (62), qui s'ouvre en direction de dépressurisation de ladite chambre de commande (48), à ladite chambre du frein de service (6) dudit cylindre de frein de service (2) ou audit moyen de ventilation.

8. Cylindre de frein de service et de frein de stationnement combiné selon une quelconque des revendications précédentes, **caractérisé en ce que** ledit moyen de verrouillage (50) comprend au moins un élément de commande (44), qui est commandable par le pression appliquée dans ladite chambre de commande (48) dudit cylindre de frein de stationnement (4), quel élément actionne, d'un côté, au moins un élément de verrouillage (70), qui est mis en précontrainte par des moyens à ressort (64, 66) hors de l'engagement dans un composant (42) fixe au cylindre et qui est guidé audit piston du frein de stationnement (30), en portant l'élément dans ledit composant (42) fixe au cylindre, et, d'autre côté, commande ledit piston du frein de stationnement (30) en direction de serrage.

9. Cylindre de frein de service et de frein de stationnement combiné selon la revendication 8, **caractérisé en ce que** ledit élément de commande (44) actionne ledit élément de verrouillage (70) et ledit piston du frein de stationnement (30) moyennant une transmission à cale (74), dans lequel un actionnement axial dudit élément de commande (44), qui est due un réglage de la pression de freinage de service dans ladite chambre de commande (48) dudit cylindre de frein de stationnement (4), pousse ledit piston du frein de stationnement (30) en sens axial le long de la direction de serrage et pousse ledit élément de verrouillage (7= en sens radial en prise dans un composant fixe au cylindre (42).

10. Cylindre de frein de service et de frein de stationnement combiné selon la revendication 8 ou 9, **caractérisé en ce que** ledit composant fixe au cylindre (42) est constitué par une barre creuse disposée dans ledit cylindre de frein de stationnement (4), ayant une surface périphérique radialement extérieure (68), ou une surface de prise (72) est formée pour ledit au moins un élément de verrouillage (70).

11. Cylindre de frein de service et de frein de stationnement combiné selon la revendication 10, **caractérisé en ce que** plusieurs éléments de verrouillage (70) sont formés, qui enferment ladite barre creuse (42) en forme d'anneau circulaire et qui sont chargés par ressort, l'un par rapport à l'autre, d'une telle manière, que lesdits éléments de verrouillage (70) soient poussés en sens radial vers l'extérieur, en une position éloignée de ladite surface de prise (72).

12. Cylindre de frein de service et de frein de stationnement combiné selon les revendications 9 et 11, **caractérisé en ce que** ledit transmission à cale (74) présente au moins une section transversale cunéiforme (76) à au moins un élément de verrouillage (70), qui, par rapport une autre section transversale cunéiforme (78), est chargée par ressort d'une telle manière, que ladite première section transversale cunéiforme (76) soit écartée d'une autre section transversale cunéiforme (78), vue en sens axial.

13. Cylindre de frein de service et de frein de stationnement combiné selon la revendication 12, **caractérisé en ce que** ledit élément de commande (44) est configuré sous forme d'un anneau exerçant une pression en sens axial sur ladite première section transversale cunéiforme (76).

14. Cylindre de frein de service et de frein de stationnement combiné selon la revendication 13, **caractérisé en ce que** ledit piston du frein de stationnement (30) est chargé par ressort en opposition à la pression régnante dans ladite chambre de commande (48) dudit cylindre de frein de stationnement (4), en étant configuré sous forme d'un piston creux guidé en sens axial à la périphérie radialement extérieure de ladite barre creuse (42), et **en ce qu'**il est muni d'une extrémité ouverte (38), à laquelle sont reçu ladite transmission à cale (74) ainsi que ledit élément de commande (44), ainsi que d'une autre extrémité (32) formée comme de fond (36), et **en ce qu'**au moins un passage de connexion (54) est formé dans la paroi dudit piston du frein de stationnement (30), afin de relier, en position de serrage du frein, un espace intérieur (34) dudit piston du frein de stationnement (30) à ladite chambre du frein de service (6), aux positions dudit piston du frein de stationnement (30) étant définies, dans lesquelles son fond (36) vient en contact avec ledit piston du frein de service (10, 12) ou dans lesquelles son fond est chargé par la pression régnante dans ladite chambre du frein de service (6) à partir de son espace intérieur (34) ou à partir de ladite chambre du frein de service (6).

15. Cylindre de frein de service et de frein de stationnement combiné selon la revendication 14, **caractérisé en ce que** ladite chambre de commande (48) est configurée sous forme d'une chambre en anneau entre ledit élément de commande (44) et une extrémité dudit cylindre du frein de stationnement (4).

16. Cylindre de frein de service et de frein de stationnement combiné selon une quelconque des revendications 8 à 15, **caractérisé en ce que** ledit au moins un élément de verrouillage (70) et ledit composant fixe au cylindre (42) sont configurés d'une telle manière, qu'un engagement positif puisse s'établir entre ledit élément de verrouillage (70) et ledit composant fixe au cylindre (42) par un mouvement dudit piston du frein de stationnement (30) en sens de desserrage du frein et par un mouvement dudit piston du frein de stationnement (30) en direction de serrage du frein.

17. Cylindre de frein de service et de frein de stationnement combiné selon une quelconque des revendications 10 à 16, **caractérisé en ce qu'**il comprend une broche de desserrage d'urgence (84) d'un moyen de desserrage d'urgence (82), qui se peut visser par rapport à un filetage intérieur de ladite barre creuse (42), à ladite broche de desserrage d'urgence (84) pouvant être vissée contre le fond (36) dudit piston du frein de stationnement (30) afin de mouvoir le dernier par une certaine distance en direction de serrage du frein afin de déverrouiller ledit moyen de verrouillage (50).

18. Système de freinage commandé par un fluide, dans un véhicule, comprenant au moins un cylindre de frein de service et de frein de stationnement combiné selon une quelconque des revendications précédentes.

19. Procédé à opérer le cylindre de frein de service et de frein de stationnement combiné selon les revendications 3, 7 et 17, **caractérisé en ce que**
a) pour le freinage de service, ledit organe de commande de frein de service est actionné en position de serrage du frein afin d'appliquer la pression de freinage de service à ladite chambre du frein de service (6) et de commuter ladite vanne magnétique à 3/2 voies (58) en sa deuxième position de commande,
b) pour le serrage d'un frein de stationnement, en partant d'une chambre du frein de service, à laquelle est appliquée la pression de freinage de service,
b1) ladite vanne magnétique à 3/2 voies (58) est commutée en sa première position de commande par l'actionnement dudit organe de commande du frein de stationnement, et ledit organe de commande du frein de service est commandé en la position de desserrage du frein,
b2) ladite vanne magnétique à 3/2 voies (58) est commutée en sa deuxième position de commande par l'actionnement dudit organe de commande du frein de stationnement,
c) pour le desserrage dudit frein de stationnement, d'abord ledit organe de commande du frein de service est commandé en sa position de serrage du frein afin d'appliquer la pression de freinage de service à ladite chambre du frein de service (6) et afin de commuter ladite vanne magnétique à 3/2 voies (58) en sa première position de commande, et **en ce qu'**ensuite ledit organe de commande du frein de service est commandé en la position de desserrage du frein, pendant que ladite vanne magnétique à 3/2 voies (58) este commutée en sa deuxième position de commande,
d) pour le desserrage d'urgence du frein de stationnement serré, la broche de desserrage d'urgence (84) est vissée contre le fond (36) dudit piston du frein de stationnement (30) afin de mouvoir le dernier sur une certaine distance le long de la direction de serrage du frein, afin de déverrouiller ledit moyen de verrouillage (50).
